# EUROPÄISCHE PATENTANMELDUNG

(11) **EP 0 860 207 A1**
(43) Veröffentlichungstag der Anmeldung: **26.08.1998**
(21) Anmeldenummer: 98103050.5
(22) Anmeldetag: 20.02.1998
(51) Int. Cl.: B01J 19/32, B01J 19/00, F16J 15/10

(54) **Dichtungselement für strukturierte Kolonnenpackungen**

(30) Priorität: 21.02.1997 DE 19706981
(71) Anmelder: W.L. GORE & ASSOCIATES GmbH, 85640 Putzbrunn (DE)
(72) Erfinder: Gantner, Josef, 85662 Hohenbrunn (DE); Terpetschnig, Thomas, 83059 Kolbermoor (DE); Wendl, Manfred, 83026 Rosenheim (DE)
(74) Vertreter: Harrison, Robert John

(57) **Zusammenfassung**

Dichtungselement (30) zur Seitenrandabdichtung in gepackten Kolonnen derart ausgebildet, daß das Dichtungselement (30) aus einem im wesentlichen ringförmig ausgebildeten Dichtungskern (10) besteht, auf den mindestens eine Lage eines anpassungsfähigen Profilbandes (20) aufgebracht ist, welches aus einem wesentlich weicheren und komprimierbareren Material als der Dichtungskern (10) besteht und schraubenförmig um den Dichtungskern (10) gewickelt ist.

## Beschreibung

Die vorliegende Erfindung betrifft ein Dichtungselement zur Seitenrandabdichtung in gepackten Kolonnen. Derart gepackte Kolonnen werden zur Intensivierung des Stoffübergangs in Absorptions-, Desorptions-, Rektifikations- und Extraktionskolonnen eingesetzt.

Zur thermischen Trennung von Flüssigkeitsgemischen und von Gas/Flüssigkeitsgemischen finden beispielsweise gepackte Destillationskolonnen Anwendung.

Eine gepackte Kolonne ist derart aufgebaut, daß in ein Kolonnenrohr Packungskörper, die eine bestimmte Oberflächenstruktur aufweisen, übereinander angeordnet werden, bis die Kolonne gefüllt ist. Eine Lage von waagerecht angeordneten Packungskörpern bei vollständiger Ausfüllung des Kolonnenquerschnittes wird als Packungslage bezeichnet. Abhängig vom Werkstoff und Durchmesser ist die Packungslage einstückig oder aus mehreren Segmenten zusammengesetzt.
Beim Bau einer Kolonne wird die äußere Hülle der Kolonne, die Kolonnenwandung, aus Einzelstücken oder Segmenten, auch Kolonnenschuß genannt, zusammengesetzt. Die Höhe eines Kolonnenschusses ist durch die Konstruktion der Kolonne vorgegeben.
In der Regel kann ein Kolonnenschuß je nach Bauhöhe mit 7-10 Packungslagen gefüllt werden. Typische Bauhöhen liegen zwischen 1,5m-2m.

Zur Erzielung einer hohen Effektivität und Selektivität der Kolonne ist es erforderlich, daß ein möglichst randdichter Einbau der Packungskörper in die Kolonne erfolgt. Dies ist nur in wenigen Anwendungen optimal realisierbar und hängt von der Toleranzbreite der zwischen Kolonneninnenwand und Packungskörpern entstehenden Seitenrandspalte ab. Insbesondere bei breit oder weit tolerierenden Kolonnenrohren ergibt sich beim Füllen der Kolonnenrohre mit den Packungskörpern eine in ihrer Größe stark variierende Gestaltung einer Packungslage, insbesondere bei einer einstückigen Packungslage, kann ein solcher Randspalt 25 mm und mehr betragen.

Aufgrund dieses Spaltes kommt es an den äußeren Rändern der Packungskörper zu einer leistungsmindernder Bach- und Strähnenbildung, da die Flüssigkeit am äußeren Rand der Packungskörper oder an der Kolonnenwandung herabfließt, statt den Weg über die Oberflächen der Packungen zu nehmen.
Dies erklärt die Notwendigkeit, den Randspalt bei mindestens jedem Kolonnenschuß in der Kolonne abzudichten.

Die Abdichtung dieses Randspaltes erfolgt in der Praxis auf verschiedene Art und Weise.
Eine Möglichkeit ist der Einsatz von Kragenrandabdichtungen aus Polytetrafluorethylen (PTFE). Nachteilig an dieser Lösung ist, daß die Kragenrandabdichtelemente die Packungskörper nicht geschlossen umgeben, sondern nur partiell angebracht werden. Weiterhin ist durch ihre starre und feste Ausführung keine Anpassung an die in ihrer Breite variierenden Randspalten möglich.

Weit verbreitet ist die Lösung bei der der Randspalt durch Verstemmen von PTFE-Schnüren ausgefüllt und abgedichtet wird.
Ebenso Glasfaserschnüre kommen zur Anwendung (Produktinformation Nr. 60045/1 der SCHOTT ENGINEERING; H.Haverland, W.Höhn, 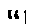 Hochkorrosionsfest 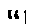 , Packungen aus Borosilicatglas 3.3 und ihre Einsatzmöglichkeiten, cav Fachthema).

Insbesondere PTFE-Schnüre sind aufgrund ihrer chemischen und thermischen Beständigkeit für eine Seitenrandabdichtung besonders gut geeignet.

Es ist bekannt, Schnurdichtungen aus expandiertem Polytetrafluorethylen (ePTFE) herzustellen. Beispielsweise wird für die Herstellung derartiger Dichtungen uniaxial gerecktes, expandiertes Polytetrafluorethylen verwendet. Diese bekannten Rundschnurdichtungen lassen jedoch bezüglich der Querfestigkeit noch wesentlich zu wünschen übrig, darüber hinaus sind Stoßstellen zum Beispiel durch Überlappen der Dichtungsenden bei derartigen Dichtungen erforderlich.

Poröses, expandiertes Polytetrafluorethylen (ePTFE) ist allgemein aus der US-PS 3 953 566 bekannt. Poröses, expandiertes Polytetrafluorethylen (ePTFE) weist eine höhere Festigkeit als die nicht expandierte Form von PTFE auf, besitzt die chemische Inertanz von herkömmlichem PTFE und, wenn es als Dichtungselement verwendet wird, weist es bei seiner Anwendung einen großen Temperaturbereich bis zu 315°C auf. Ein Beispiel eines Dichtungsmaterials aus ePTFE ist GORE-TEX® Flachdichtung DF, das durch die W.L.Gore & Associates GmbH hergestellt wird.

Als PTFE-Schnüre zur Seitenrandabdichtung in gepackten Kolonnen werden uniaxial expandierte Schnüre, extrudierte ungereckte Schnüre und weich gewickelte Packungsschnüre mit einer Seele und einem Jacket aus schmalen expandierten PTFE-Tapes verwendet.

Nachteilig an diesen Schnurlösungen ist, daß sie auf den ringförmigen Randspalt zwischen Kolonnenwand und Packungskörper gelegt werden und die Schnurenden an der Verbindungsstelle verbunden werden müsen. Die entstehende Verbindungsstelle ist aufgrund der insgesamt geringen Eigensteifigkeit der Schnüre instabil und kann durch thermische und mechanische Einwirkungen auseinandergehen. Begünstigt wird das Lösen der Verbindung durch die geringen Querkräfte, die durch das Verstemmen auf die Schnur wirken.

Besonders negativ wirkt sich der bei thermischen Prozessen in geschlossenen Behältern auftretende 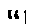 Siedeverzug 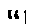 aus. Bei diesem Prozeß kommt es in der Kolonne infolge eines plötzlichen Verdampfens zu einem Druckstoß, bei dem die Packungskörper kurzzeitig ihre angestammte Lage verändern. Dies bewirkt, daß sich die Verbindungsstellen der Schnurlösungen öffnen und die Schnüre in den Randspalt ganz oder teilweise gleiten. Die auf diese Weise entstandenen Kanäle und Trichter leiten die Flüssigkeit in den Randspalt und verringern somit die Effektivität und Selektivität der gepackten Kolonne.

Wie oben erwähnt, besitzen die Schnüre im Gegensatz zu einem geschlossenen Ring keine Eigensteifigkeit und auch während des Vorgangs des Verstemmens kann keine Eigenstabilisierung erfolgen. Aufgrund der fehlenden Entwicklung von Querkräften führt dies dazu, daß an Verbindungsstellen und Orten größerer Spaltweiten die Schnur unzulässig in den Spalt gedrückt werden kann und nur eine unzureichende Abdichtung erfolgt ist.

Die Verwendung von vergleichsmäßig harten PTFE-Extrudaten setzt eine hohe Maßhaltigkeit von Kolonnenschußdurchmesser und Packungsdurchmesser voraus. Liegen minimale Randspalten vor, kann es beim Verstemmen der harten Dichtung an sehr schmalen Stellen durch die nur geringe Komprimierbarkeit des Dichtungsmaterials zu hohen Querkräften und dadurch zu Beschädigungen der Packung kommen.

Bei ePTFE-Schnüren dagegen besteht die Gefahr, daß es aufgrund der starken Komprimierbarkeit der ePTFE-Matrix zum Durchdrücken an Stellen mit Maximalabweichungen kommt.

In Folge einer Weiterentwicklung wurde versucht, eine ePTFE-Schnur mit einem flachen uniaxialen ePTFE-Tape als Verstärkung zu umwickeln. Jedoch auch diese Schnurlösung konnte nicht zu einer befriedigenden Abdichtung beitragen, da sich wegen der fehlenden Eigensteifigkeit der ePTFE-Schnur eine Ummantelung nur schwer realisieren läßt. Nachteilig ist ebenso, daß sich bereits im Wickelprozess Leckagekanäle bildeten. Weiterhin ist mit einer Tapewicklung die maximal überbrückbare Spaltweitentoleranz sehr begrenzt.

Allen oben beschriebenen Dichtungsschnüren ist es gemeinsam, daß bei ihnen aufgrund ihrer fehlenden Eigensteifigkeit keine dauerhafte Positionierung innerhalb einer Ebene in der Kolonne möglich ist.
Durch die thermische Ausdehnung der Packungskörper bei Betrieb der Kolonne als auch bei dem oben beschriebenen "Siedeverzug" kommt es zu Relativbewegungen zwischen Packungskörpern und Kolonnenwandung sowie der Packungskörper zueinander. Diese Relativbewegung führt zu einem Verrutschen oder einem Falschpositionieren der Dichtungsschnüre und damit zu einer verringerten Trennleistung der Kolonne.

Aufgabe der vorliegenden Erfindung ist es daher, ein Dichtungselement zu schaffen, welches die Nachteile des Standes der Technik überwindet.

Die Aufgabe der Erfindung wird dadurch gelöst, daß ein Dichtungselement für gepackte Kolonnen geschaffen wird, das aus einem im wesentlichen ringförmig ausgebildeten Dichtungskern besteht, auf dem mindestens eine Lage eines der Ringform anpassungsfähigen Profilbandes aufgebracht ist. Anpassungsfähig bedeutet, daß das Profilband aus einem weichen und verdichtbaren Material besteht und so den Verhältnissen der Randspalte, wie unterschiedliche Größe der Randspalte oder Unebenheiten bei den äußeren Rändern der Packungskörper, angepaßt werden kann.

Das erfindungsmäßige Dichtungselement umfaßt somit einen im wesentlichen ringförmigen Dichtungskern der durch Umwickeln, bevorzugt mit einem mehrstangigen Profilband, seinen Umfang an die Größe des Seitenrandspaltes anpaßen kann. Eine besonders vorteilhafte Lösung ist das Verwenden von einem dreistrangigen Profilband, welches um den Dichtungskern gewickelt wird.

Der Dichtungskern stellt einen geschlossenen Kernring dar, der die Seitenrandspalte grundsätzlich verschließt. Der geschlosssene Ring tritt als Trägerelement auf und weist eine hohe Quer- und Längsfestigkeit auf
Das anpassungsfähige Profilband besteht aus einem weichen, verformbaren Material. Mit der Umwickelung des Kernringes mit dem Profilband wird ein Anpassen an die variierende Größe des Spaltes ermöglicht.
Das erfindungsmäßige Dichtungselement kann so gestaltet sein, daß an Stellen mit großen Spaltenweitentoleranzen innerhalb eines Kolonnenschußes und/oder Packungslage das Profilband mehrlagig verwendet wird.

Aufgrund der weicheren Materialbeschaffenheit des Profilbandes als des Kernringes kann sich dieses während des Verstemmens besser an die Oberflächengegebenheiten von Packung und Kolonnenschußwandung anpassen.
Durch diesen Verbund wird erreicht, daß der Randspalt dicht verschlossen werden kann, ohne daß es zu einer Beschädigung der Packung oder zu einem unzulässigen Eindrücken der Abdichtung in den Spalt führt. Die mehrlagige Umwicklung mit dem Profilstrang ermöglicht eine Anpassung an maximale Spaltbreiten.

Mit der erfindungsgemäßen Seitenrandabdichtung in gepackten Kolonnen besteht zusätzlich die Möglichkeit, die Anzahl der in einem Kolonnenrohr zwischen mehreren Packungen bei der Destillation angeordneten Flüssigkeitsverteiler bei gleichbleibender Selektivät einzuschränken,

Der Dichtungskern, im folgenden auch als Kernring bezeichnet, stellt eine Schnurdichtung dar, die entsprechend dem Verfahren der deutschen Patentanmeldung DE-A-19723907.2 (Wendl, M.; Gantner. J.; Anmelder W.L.Gore & Associates GmbH) zu einem ringförmig ausgebildeten, mehrschichtig aufgebauten Kernring gewickelt wird.

Das folienförmige Material zur Herstellung einer Dichtung gemäß DE-A-19723907.2 und das Material zur Herstellung des Profilbandes ist beispielsweise PTFE, es kommen aber auch andere Materialarten in Frage. Für das folienförmige Material können beispielsweise alle schlauchförmigen Materialien verwendet werden. Schläuche können z.B. aus Bändchen oder aus Polymerfolien hergestellt werden, wobei als solche Polymerfolien beispielsweise PVC-, PU- sowie PTFE-Folien zu nennen sind.

PTFE ist ein bevorzugtes Ausgangsmaterial aufgrund seiner hervorragenden chemischen Beständigkeit gegenüber hochaggressiven Stoffen.

Als folienförmiges Material wird vorzugsweise wenigstens ein Material aus biaxial gerecktem, expandierten Polytetrafluorethylen (ePTFE) verwendet.

Vorzugsweise liegt das biaxial gereckte ePTFE in Form einer Membrane vor.

Dabei kommen poröse Membrane aus synthetischen Polymeren, wie zum Beispiel Polyethylen, Polypropylen oder Fluorpolymeren zur Anwendung.
Besonders bevorzugt sind Fluorpolymere wie Tetrafluorethylen/(perfluoralkyl) binylethercopolymer (PFA), Tetrafluorethylen/hexafluorpropylen copolymer (FEP) und Polytetrafluorethylen (PTFE).

Besonders bevorzugt ist ein poröser Polytetrafluorethylenfilm wie er in der US-PS 3,953,566 und US-PS 4,187,390 beschrieben ist.

Das Profilband, welches auf den Kernring aufgebracht wird, besteht beispielsweise aus uniaxial gerecktem ePTFE.

Vorzugsweise liegt das uniaxial gereckte ePTFE in Form eines dreistrangigen Profilbandes vor.

Das Profilband ist in einer bevorzugten Ausführungsform dreistrangig, wobei jeder einzelne Strang einen nominellen Durchmesser zwischen 3 - 5 mm aufweisen kann. Das uniaxial gereckte Profilband aus ePTFE ist ein weiches und leicht verformbares Material und läßt sich so an den Umfang des Kernringes hervorragend anpassen.

Das Profilband läßt sich aus diesem Grund auch sehr gut unabhängig vom Wickelwinkel aufbringen und wird mit Hilfe eines Klebestreifens, der auf dem Profilband aufgebracht ist, auf dem Ring fixiert.

In einer bevorzugten Ausführung kann die äußere anpassungsfähige Lage auch durch einen geschlitzten ePTFE-Schlauch ausgeführt werden, so daß das Umwickeln des Kernrings für die erste Lage wegfallen würde. An der Verbindungsstelle kann der Schlauch einfach überlappen. Somit kann eine schnellere Monage des Dichtungselementes erreicht werden.
Nach Bedarf kann der auf dem Kernring aufgebrachte Schlauch ganz oder teilweise mit Profilband verstärkt werden.

Das Dichtungselement wird beispielsweise durch Verstemmen in die Randspalte geformt.

Während des Verstemmens wird das Profilband durch die auftretenden Querkräfte komprimiert, wobei durch die Verbreiterung der einzelnen Stränge die Zwischenräume zwischen den Strängen des Profilbandes ausgefüllt werden, so daß es zu einer homogenen über den Umfang gleichmäßigen Anpassung und Anpressung der Seitenrandabdichtung an die Kolonnenschußwandung kommt.

Eine Seitenwandabdichtung aus einem geschlossenen Ring stabilisiert sich während des Verstemmens durch seine Eigensteifigkeit, so daß an Stellen mit maximalen Spalten die Dichtung nicht unzulässig in die Spalte gedrückt wird. Somit ist gleichzeitig eine dauerhafte Positionierung des Dichtungselementes in einer Ebene möglich.

Packungslagen und Kolonnenschüsse mit variierenden Toleranzbreiten der Durchmesser können mit Hilfe des erfindungsgemäßen Gegenstandes sicher gedichtet werden.

In einer weiteren Ausführungsform liegen Kolonnen in sehr geringen Durchmessern vor, so daß die Packungslagen beim Bestücken der Kolonne nur mit Hilfe eines sogenannten Stempels von oben in die Kolonne geschoben werden können. In diesem Fall muß das Dichtungselement vor dem Einstempeln am oberen Packungsrand befestigt und dann als Einheit in die Kolonne gedrückt werden.

Zur näheren Erläuterung der vorliegenden Erfindung, ihrer weiteren Merkmale und Vorteile dient die nachfolgende Beschreibung von Ausführungsbeispielen der Erfindung unter Bezugnahme auf die angefügten Zeichnungen.

Es zeigen im Einzelnen.
- Fig. 1: eine perspektivische Teildarstellung eines Dichtungselementes bestehend aus einem mit einem dreistrangigen Profilband umwickelten Dichtungskernes,
- Fig. 2: eine perspektivische Darstellung eines Dichtungskernes
- Fig.3: eine perspektivische Darstellung eines dreistrangigen Profilbandes,
- Fig. 4: eine perspektivische Teildarstellung eines mit einem dreistrangigen Profilband umwickelten Dichtungskernes, wobei hier partiell eine weitere Lage eines dreistrangigen Profilbands aufgebracht ist,
- Fig. 5: einen Querschnitt durch eine gepackte Kolonne mit zwischen der Kolonnenwand und der Packung eingestemmten Dichtung,
- Fig. 6: einen Teillängsschnitt durch eine gepackte Kolonne mit zwischen der Kolonnenwand und den Packungen eingestemmten Dichtungen
- Fig. 7: eine perspektivische Teildarstellung eines mit einem dreistrangigen Profilband umwickelten Dichtungskernes, wobei der mittlere Strang mit einer Klebefläche versehen ist.
- Fig. 8: eine perspektivische Teildarstellung eines Kernringes auf den ein geschlitzte Schlauch als erste Schicht aufgebracht ist.

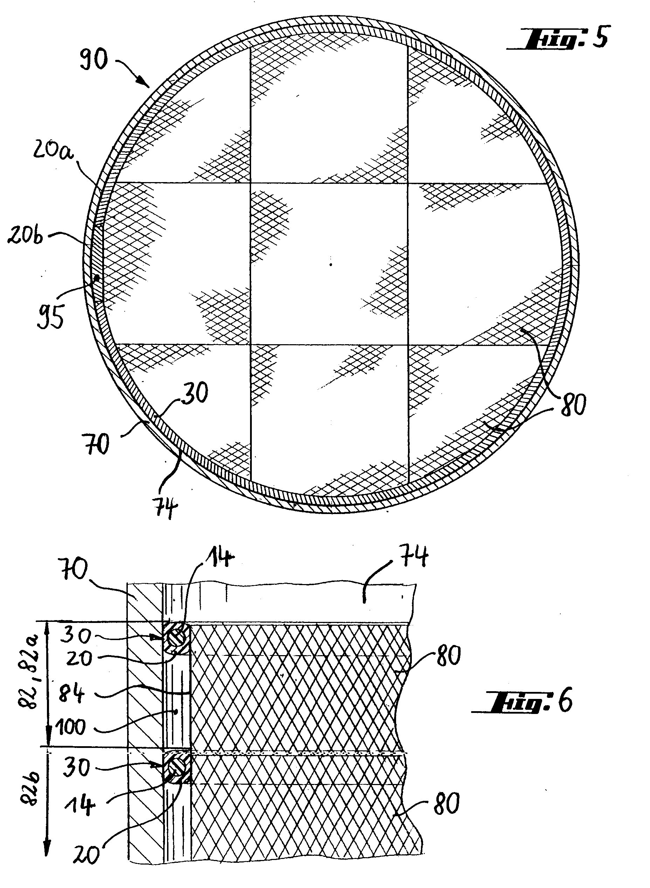

Bevor das erfindungsgemäße Dichtungselement erläutert wird, soll mit Hilfe Fig. 5 und 6 der prinzipielle Aufbau gepackter Kolonnen erläutert werden.

Fig. 5 zeigt einen Querschnitt durch eine gepackte Kolonne 90.
Die gepackte Kolonne 90 besteht aus einem Kolonnenrohr 70, welches mit geordneten Packungskörpern 80 vollständig gefüllt ist. Die Packungskörper 80 sind entsprechend dem Einsatzgebiet der Kolonne aus unterschiedlichen Materialien gefertigt wie Keramik, Edelstahl, Metallegierungen, Kunststoffe, beschichtete und geformte Glasfasergebilden oder Glaswellplatten. Die Packungskörper 80 besitzen unterschiedliche Oberflächenstrukturen, beispielsweise bestehen sie aus schräg gewellten Platten, die alternierend gegenläufig so aneinander gelegt sind, daß offene, sich kreuzende Kanäle, die schräg zur Kolonnenachse verlaufen, gebildet werden. Die Packungskörper 80 sind quaderförmig, rund oder als dreieckige Körper, dessen eine Seite gerundet ausgebildet ist, geformt.

Fig. 6 zeigt zwei Packungslagen 82a,b im Teillängsschnitt durch eine gepackte Kolonne 90. Die waagerechte Füllung in einer Ebene des Querschnitts einer Kolonne 90 mit Packungskörpern 80 wird als Packungslage 82 bezeichnet. Eine Packungslage 82 besteht aus mindestens einem Packungskörper 80. Eine gepackte Kolonne 90 besteht aus mehreren Packungslagen 82.

Die Packungskörper 80 befinden sich in Fig.6 übereinander geschichtet im Kolonnenrohr 70. Zwischen der Kolonnenwandung 74, der Innenwand des Kolonnenrohres 70, und den Packungskörpern 80 ergibt sich ein Randspalt 100, der in Abhängigkeit vom Durchmesser der jeweiligen Packungslagen 82a,b und der Gestaltung der äußeren Ränder 84 der Packungskörper 80, unterschiedlich groß ist.

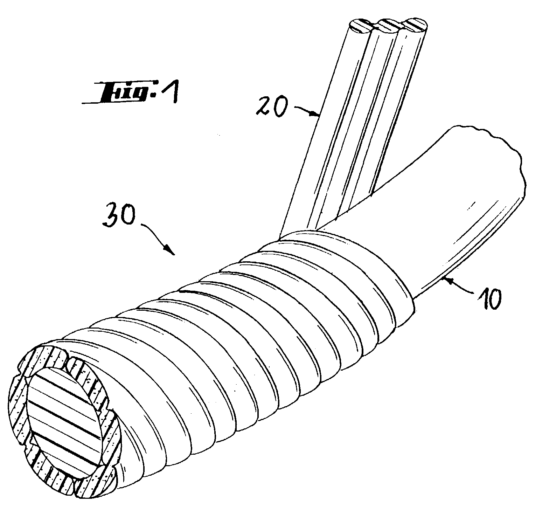

Fig. 1 zeigt ein Ausführungsbeispiel des erfindungsgemäßen Dichtungselementes 30. Dieses umfaßt einen Dichtungskern 10 auf den ein anpassungsfähiges Profilband 20 aufgebracht ist. Anpassungsfähig bedeutet, daß das Profilband 20 aus einem weichen und verdichtbaren Material besteht und so den Verhältnissen der Randspalte 100, wie unterschiedliche Größe der Randspalte 100 oder Unebenheiten bei den äußeren Rändern 84 der Packungskörper 80, angepaßt werden kann. Das Profilband 20 kann einstrangige oder mehrstrangig sein. Es wird bevorzugt in gewickelter Form auf den Dichtungskern 10 aufgetragen.
In Fig. 1 ist der Dichtungskern 10 mit einem dreistrangige Profilband 20 dicht umwickelt.
Bewährt hat sich ein schraubenförmiges Aufbringen des Profilbandes 20 wie in Figur 1 dargestellt.

Wichtig für die volle Funktionstüchtigkeit des Dichtungselementes 30 ist ein dichtes bzw. homogenes Aufbringen des Profilbandes 20. Das bedeutet, die Stränge 24 des Profilbandes 20 müssen bei jeder Wickelung dicht nebeneinander abschließen. Dies kann aufgrund der leicht verformbaren Struktur des Profilbandes 20 gleichfalls sehr gut unabhängig vom Wickelwinkel geschehen. Im Zuge der Einarbeitung des Dichtungselementes 30 in den Randspalt können Unregelmäßigkeiten in der Wickelung durch Verformen der Stränge 24 des Profilbandes 20 beseitigt werden. So wird die Bildung von Leckagekanäle im Dichtungselement 30 verhindert, in denen Flüssigkeit von der Oberfläche der Packungskörper 80 eines Kolonnenschusses 82, abgeführt werden kann.

Zusätzlich dient das Aufbringen einer Lage eines Profilbandes 20 dem Schutz des Dichtungskerns 10, da sonst die oberen dünnen Lagen des Dichtungskerns 10 durch scharfe oder spitze Ränder oder Ecken der Packungskörper 80 beschädigt werden können.

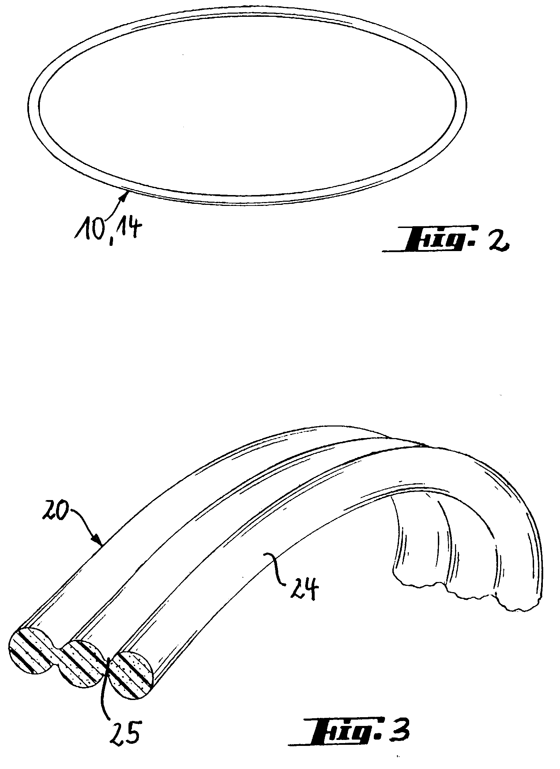

Fig. 2 zeigt einen Dichtungskern 10. Dieser bildet das Kernstück des Dichtungselementes 30 und ist im wesentlichen ringförmig ausgebildet. Ein im wesentlichen ringförmiger Dichtungskern 10 heißt, daß die Ringform nicht zwingend vorgeschrieben ist, sondern auch geschlossenen Einheiten ähnliche Formen wie beispielsweise ovalförmig, möglich sind. Die Ringform ist durch den ringförmigen Aufbau des Kolonnenrohres 70 vorgegeben.
Zur besseren Darstellung wird der Dichtungskern 10 auch als Kernring 14 bezeichnet.

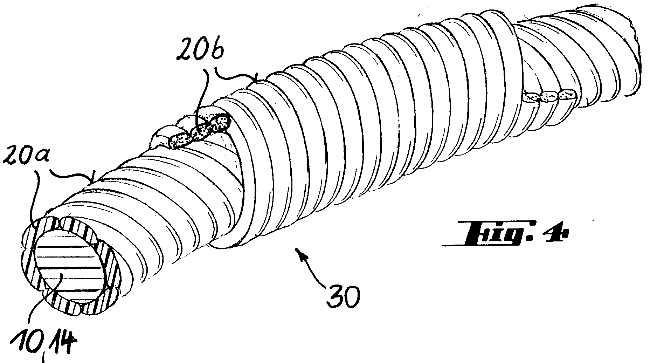

Fig. 3 zeigt das Profilband 20 in einer dreistrangigen Ausführung. Ob ein ein- oder mehrstrangiges Profilband 20 verwendet wird, ist nicht festgelegt. Gleichfalls kann die Art des Profiles frei gewählt werden wie ein rundes oder quaderförmiges Profil.
In Fig. 3 liegen die Stränge 24 des Profilbandes 20 in Form eines Rundprofiles vor. Zwischen den Strängen 24 befinden sich die Zwischenräume 25. Das Profilband 20 ist ein Endlosband und kann auf die erforderliche Länge zum Umwickeln des Kernringes 14 zurechtgeschnitten werden.

Das Profilband 20 wird so um den Kernring 14 gewickelt, daß der gesamte Kernring 14 vollständig bedeckt ist. Die beiden Enden des Profilbandes 20 treffen aufeinander und werden durch ein einfaches Übereinanderlegen der Enden miteinander verbunden. Vorteilhafterweise werden dabei die Stränge 24 des einen Endes in Zwischenräume 25 der Stränge 24 des zweiten Endes gelegt. Durch Druckeinwirkung werden die Enden miteinander verpreßt und eine stabile Verbindung liegt vor.

Die Größe des Kernringes 14 ergibt sich aus den Abmessungen der Kolonne 90 und den Packungskörpern 80. Der Durchmesser des Kernringes 14 bestimmt sich aus dem Innendurchmesser der Kolonnenwandung 74.
Die Dicke des Kernringes 14 wird aus dem minimalsten Abstand zwischen den strukturierten Packungskörpern 80 und der Kolonnenwandung 74 festgelegt. Das heißt die Stelle der jeweiligen Packungslage 82, die den geringsten Randspalt 100 vorweist, gibt die minimalste Dicke des Kernringes 14 vor.
Es hat sich als vorteilhaft herausgestellt, mit eine Dicke zu arbeiten, die 20%-25% über der Breite des geringsten Randspaltes 100 liegt.

Fig.4 zeigt eine weitere Ausführungsform des Dichtungselementes 30. Hier ist ein Dichtungselement 30 entsprechend Fig. 1 mit einer weiteren partiellen Lage 20b des Profilbandes 20 ausgestattet. Diese weitere Lage 20b des Profilbandes 20 wird an den Stellen auf die erste Lage Profilband 20a gewickelt, wo die Randspalte 100 derart groß ist, daß mit einer einfachen Umwickelung des Kernringes 14 kein dichtes Verschließen der Randspalte 100 erfolgen kann. Das Aufbringen von weiteren Lagen 20b des Profilbandes 20 gestattet ein Abdichten auch weit variierender Randspalten 100 zwischen den Rändern 84 der Packungskörper 80 und der Kolonnenwandung 74.

Fig. 5 zeigt ein Dichtungselement 30 in einer gepackten Kolonne 90. Die gepackte Kolonne 90 setzt sich aus der Kolonnenwandung 74 des Kolonnenrohrs 70 und den Packungskörpern 80 zusammen. In dem Querschnitt befindet sich zwischen Kolonnenwandung 74 und Packungskörpern 80 ein Dichtungselement 30. Dieses verschließt die Randspalte 100 (nicht sichtbar) und dichtet die Packungslage 82 zur Kolonnenwandung 74 hin ab. Entsprechend den Abmessungen der gepackten Kolonne 90 wie dem Durchmesser der Kolonnenwandung 74 und den Abmessungen der Packungskörper 80 und der sich daraus ergebenen Randspalte 100 wird ein erfindungsgemäßes Dichtungselement 30 hergestellt. An den zuvor ermittelten Stellen der Packungslage 82 mit maximalen Randspalten 100 wird das Dichtungselement 30 entsprechend mit weiterem Profilband 20b verstärkt. Dies ist in Fig. 5 an der Stelle 95 erkennbar.
Wesentlich für das Abdichten der Kolonne 90 ist das Einbringen des Dichtungselementes 30 in den Randspalt 100. Bei dem in Fig. 5 gezeigten Querschnitt durch eine gepackte Kolonne 90 ist zwischen der Kolonnenwand 74 und den Packungskörpern 80 das erfindungsgemäßes Dichtungselement 30 eingestemmt.
Während dem Vorgang des Verstemmens wird das Dichtungselement 30 in den Randspalt 100 gepreßt. Das Dichtungselement 30 stabilisiert sich während des Verstemmens durch seine Eigensteifigkeit. Das Profilband 20 wird durch die auftretenden Querkräfte komprimiert, wobei durch die Verbreiterung der einzelnen Stränge 24 die Zwischenräume zwischen den Strängen 24 des Profilbandes 20 ausgefüllt werden, so daß es zu einer homogenen über den Umfang gleichmäßigen Anpassung und Anpressung des Dichtungselementes 30 an die Kolonnenwandung und den äußeren Rand 84 der Packungskörper 80 kommt.

Fig. 6 zeigt ein eingestemmtes Dichtungselement 30 im Kolonnenlängsschnitt. In der Fig. sind zwei Packungslagen 82a, b dargestellt. Zwischen Kolonnenwandung 74 und der oberen Abschlußkante eines Packungskörpers 80 ist das Dichtungselement 30 befestigt. Das Dichtungselement 30 wird durch Verstemmen in den Randspalt 100 gepreßt. Dabei wird das Dichtungselement 30 derart verstemmt, daß es mit der Oberfläche der Packungskörper 80 eine Ebene bildet.
Das Abdichten gepackter Kolonnen 90 erfolgt beim Bestücken dieser Kolonnen 90 mit Packungskörpern 80 und zwar vorteilhafterweise bei jeder Packungslage 82, mindestens bei jedem Kolonnenschuß. Nach jedem vollständigen Füllen des Kolonnenquerschnittes mit Packungskörpern 80, d.h. bei jeder Packungslage 82, wird der entstandene Randspalt 100 mit dem Dichtungselement 30 abgedichtet. Eine Abdichtung kann gleichwohl auch erst nach mehreren Packungslagen 82 erfolgen.

Bei sehr kleinen Kolonnen 90 mit sehr geringen Durchmessern wird ein Packungskörper 80 mit Presswerkzeugen, wie einem Stempel, in die Kolonne 90 gedrückt. In einem solchen Anwendungsfall wird das Dichtungselement 30 vor dem Einstempeln in die Kolonne 90 über die äußeren Ränder des Packungskörpers 80 geschoben und mit dem Packungskörper 80 in die Kolonne 90 gedrückt.

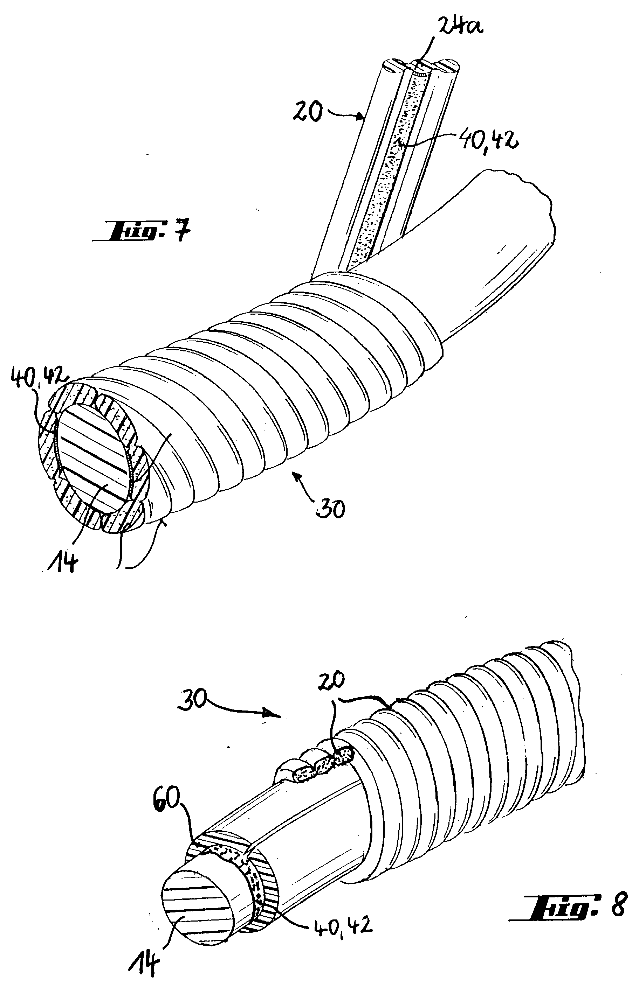

Fig. 7 zeigt eine Befestigungsart des Profilbandes 20 auf dem Kernring 14.
Zur Befestigung des Profilbandes 20 auf dem Kernring 14 kann dieser mit einem Klebestreifen 40 ausgestattet sein. Der Klebestreifen 40 kann vor der Wickelung oder während des Wickelprozesses auf der Unterseite eines oder mehrerer Stränge 24 des Profilbandes 20 aufgebracht werden. Wie in Fig. 7 erkennbar, befindet sich dieser Klebestreifen 40 vorzugsweise auf der Unterseite des mittleren Stranges 24a bei einem dreistrangigen Profilband 20.

Der Klebestreifen 40 entspricht etwa der Breite dieses Stranges 24a, der somit während des Wickelprozesses auf dem Kernring 14 fixiert. Als Material für den Kleber des Klebestreifens 40 eignen sich handelsübliche Klebstoffe wie Kleber auf der Grundlage von Epoxid- und Silicon-Harz oder Klebstoffe auf Kautschukbasis. Der Klebestreifen 40 kann bevorzugt als doppelseitiges Klebeband 42 vor dem Wickelprozeß auf dem Profilband 20 angebracht werden. Ein Beispiel für ein geeignetes Klebeband wird von der 3M Corp. hergestellt und unter der Bezeichnung Scotch™ 927 vertrieben.

Fig. 8 zeigt einen weiteren Aufbau des Dichtungselementes 30.
Die äußere erste Lage des Profilbandes 20 ist durch einen geschlitzten ePTFE Schlauch 60 ausgeführt, so daß das Umwickeln des Kernringes 14 für die erste Lage wegfallen kann. Diese Ausführung ermöglicht eine schnellere Montage des Dichtungselementes 30.
Der Schlauch 60 wird nach seiner Längsschlitzung um den Kernring 14 gewickelt. Seine Befestigung am Kernring 14 erfolgt beispielsweise über Kleberverbindungen wie über die zuvor erwähnten handelsübliche Klebstoffe oder ein Klebeband 40 wie ein doppelseitiges Klebeband 42. Das doppelseitige Klebeband 42 wird zuvor am Kernring 14 fixiert, anschließend wird der Schlauch 60 aufgewickelt und durch das Klebeband 42 am Kernring14 befestigt.

Als Dichtungsmaterial für das Dichtungselement 30 wird PTFE verwendet. Es sind aber auch andere Werkstoffe denkbar, wie Polyurethan, Polyethylen oder Elastomere.
Ein erfindungsgemäßes Dichtungselement 30 soll für den Einsatz in gepackten Kolonnen 90 eine universelle chemischen Beständigkeit sowie eine hohe Temperaturbeständigkeit aufweisen. Für diese Zwecke hat sich gerecktes ePTFE als besonders gut geeignet herausgestellt.

In der bevorzugten Ausführungsform besteht der Dichtungskern 10 aus biaxial gerecktem ePTFE und weist aufgrund dem Verfahren seiner Herstellung, dem verwendeten Material und der geschlossenen Ringform eine bestimmte Eigensteifigkeit und Feste auf.
Der als Kernring 14 ausgebildete Dichtungskern 10 wird entsprechend dem Verfahren der DE-A-197 23 907.2 zu einer ringförmig ausgebildeten, mehrschichtig aufgebauten Schnurdichtung gewickelt. In einer bevorzugten Ausführungsform weist der Kernring 14 eine ePTFE-DIchte von 0,6-1,1g/cm³ auf.

Das Profilband 20 besteht aus uniaxial ePTFE und liegt in einem wesentlich weicheren und komprimierbareren Zustand vor. Dieses Material läßt sich leicht an die Abmessungen der abzudichtenden Gegenstände anpassen.
Die besten Kompressibilitätseigenschaften ergeben sich nach experimentiellen Befunden bei einer ePTFE-Dichte von 0,5-0,7 g/cm 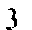 .

### Bezugszeichenliste

- 10: Dichtungskern
- 14: Kernring
- 20: Profilband
- 20a: Profilband
- 20b: Profilband
- 24: dreistrangiges Profilband
- 24a: mittlerer Strang eines dreistrangigen Profilbandes
- 30: Dichtungselement
- 40: Klebeband
- 60: ePTFE Schlauch, geschlitzt
- 70: Kolonnenrohr
- 74: innere Kolonnenwandung
- 80: Packungskörper
- 82: Packungslage
- 82a: Packungslage
- 82b: Packungslage
- 84: äußerer Rand der Packungskörper
- 90: gepackte Kolonne
- 95: mehrfach aufgewickeltes Profilband
- 100: Randspalt

## Patentansprüche

1. Dichtungselement zur Seitenrandabdichtung in gepackten Kolonnen wobei
das Dichtungselement (30) aus einem im wesentlichen ringförmig ausgebildeten Dichtungskern (10) besteht, auf den mindestens eine Lage eines anpassungsfähigen Profilbandes (20) aufgebracht ist.

2. Dichtungselement (30) nach Anspruch 1,
wobei
der im wesentlich ringförmige Dichtungskern (10) mit dem anpassungsfähigen Profilband (20) umwickelt wird.

3. Dichtungselement (30) nach Anspruch 2,
wobei
das anpassungsfähige Profilband (20) schraubenförmig um den Dichtungskern (10) gewickelt wird.

4. Dichtungselement (30) nach einem der Ansprüche 1 bis 3,
wobei
der wesentlich ringförmige Dichtungskern (30) mehrlagig mit dem Profilband (20a,b) umwickelt werden kann.

5. Dichtungselement (30) nach einem der Ansprüche 1 bis 4,
wobei
auf den wesentlich ringförmigen Dichtungskern (10) ein einstrangiges Profilband (20) aufgebracht ist.

6. Dichtungselement (30) nach Anspruch 5,
wobei
auf den wesentlich ringförmigen Dichtungskern (10) ein mehrstrangiges Profilband (20) aufgebracht ist.

7. Dichtungselement (30) nach einem der Ansprüche 1 bis 6,
wobei
auf den wesentlich ringförmigen Dichtungskern (10) ein dreistrangiges Profilband (20) aufgebracht ist.

8. Dichtungselement (30) nach einem der Ansprüche 1 bis 7,
wobei
das anpassungsfähige Profilband (20) einen vorzugsweise runden Querschnitt aufweist.

9. Dichtungselement (30) nach einem der Ansprüche 1 bis 8,
wobei
das Profilband (20) aus einem weichen und verdichtbaren Material ist.

10. Dichtungselement (30) nach einem der Ansprüche 1 bis 9,
wobei
der Dichtungskern (10) und/oder das Profilband (20) aus PTFE sind.

11. Dichtungselement (30) nach einem der Ansprüche 1 bis 10,
wobei
der Dichtungskern (10) und/oder das Profilband (20) aus gerecktem expandiertem PTFE sind.

12. Dichtungselement (30) nach Anspruch 11,
wobei
der Dichtungskern (10) aus biaxial gerecktem expandiertem PTFE ist.

13. Dichtungselement (30) nach Anspruch 11,
wobei
das Profilband (20) aus uniaxial gerecktem expandiertem PTFE ist.

14. Dichtungselement (30) nach einem der Ansprüche 1 bis 13,
wobei
das Profilband (20) einen nominellen Durchmesser von 3-5 mm aufweist.

15. Dichtungselement (30) nach einem der Ansprüche 1 bis 14,
wobei
mindestens ein Strang (24) eines ein - oder mehrstrangig aufgebauten Profilbandes (20) mit einem Klebestreifen (40) ausgerüstet ist.

16. Dichtungselement (30) nach einem der Ansprüche 1 und 2,
wobei
die erste Lage auf den Dichtungskern (10) durch einen geschlitzten ePTFE Schlauch (60) ausgeführt werden kann.

17. Dichtungselement (30) nach einem der Ansprüche 11 und 13,
wobei
das Profilband (20) eine Dichte von 0,5-0,7 g/cm³ aufweist.

18. Dichtungselement (30) nach einem der Ansprüche 11 und 12,
wobei
der Dichtungskern (10) eine Dichte von 0,6-1,1g/cm³ aufweist.
